(19) Europäisches Patentamt
European Patent Office
Office européen des brevets

(11) EP 4 717 347 A2

(12) EUROPEAN PATENT APPLICATION

(43) Date of publication:
01.04.2026 Bulletin 2026/14

(51) International Patent Classification (IPC):
**B01D 61/08** (2006.01)

(21) Application number: 26158131.8

(22) Date of filing: 13.06.2023

(52) Cooperative Patent Classification (CPC):
**B01D 61/08; C02F 1/006;** B01D 2313/08;
B01D 2313/13; B01D 2319/02; C02F 1/441;
C02F 1/442; C02F 2201/005

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR

(30) Priority: 13.06.2022 US 202263351594 P
17.06.2022 US 202263353178 P

(62) Document number(s) of the earlier application(s) in
accordance with Art. 76 EPC:
23738340.1 / 4 536 384

(71) Applicant: DDP Specialty Electronic Materials US,
LLC
Wilmington, Delaware 19805 (US)

(72) Inventors:
• HUEHMER, Robert
  Edina, 55439 (US)

• JONS, Steven
  Edina, 55439 (US)
• NADAV, Ran
  4650109 Kfar Saba (IL)
• FRANKLIN, Luke
  Edina, 55439 (US)
• JOHNSON, Jon
  Edina, 55439 (US)

(74) Representative: Abitz & Partner
Postfach 86 01 09
81628 München (DE)

Remarks:
This application was filed on 12.02.2026 as a
divisional application to the application mentioned
under INID code 62.

(54) **FLOW DISTRIBUTOR FOR BATCH OR SEMI-BATCH HYPERFILTRATION SYSTEM**

(57) A filtration system having: (a) a recirculation loop, (b) a pump, (c) a waste outlet, (d) a valve separating the loop from a waste outlet (d) a control device for said valve, (e) a membrane pressure vessel comprising a feed port, concentrate port and permeate port, and hyperfiltration elements in an axial direction, including an end hyperfiltration element nearest an inlet port or outlet port, (f) a flow distributor located between said end hyperfiltration element and said fluid port to provide a velocity profile with a coefficient of variation of less than 0.1 or a flow resistance of between 10 and 200 kPase·cW·-1, (g) wherein the flow distributor has a proximal surface nearest the end hyperfiltration element and a distal surface nearest said fluid port, and (h) an axial positioner that locates said distal surface at least 50% of the distance between the end hyperfiltration element and the port.

Fig. 1

EP 4 717 347 A2

**Description**

CROSS-REFERENCE TO RELATED APPLICATIONS

The present application claims priority under 35 U.S.C. § 365(c) to U.S. Provisional Appln. Nos. 63/351,594, filed on June 12, 2022, and 63/535,178, filed on June 17, 2022, each of which is incorporated herein by reference in its entirety.

FIELD OF THE INVENTION

The invention relates to a flow distributor and its use to improve efficiency of batch or semi-batch hyperfiltration (reverse osmosis (RO) or nanofiltration (NF)) systems.

BACKGROUND OF THE INVENTION

Several patents, patent applications and publications are cited in this description in order to more fully describe the state of the art to which this invention pertains. The entire disclosure of each of these patents, patent applications and publications is incorporated by reference herein.

For batch or semi-batch reverse osmosis systems, such as closed-circuit reverse osmosis (CCRO), the concentrate volume at the end of a permeation cycle is fixed by the total water hold-up volume in the feed-concentrate channels of the membrane element, the pressure vessels in the array and the piping. Incorporation of a larger starting volume results in a longer permeation cycle duration before the brine displacement, which is beneficial in the operation at lower water recoveries. To achieve a larger hold-up volume, and longer cycle times, it is common to leave additional space in the pressure vessels in addition to the hyperfiltration elements necessary to produce the desired permeate volume. A hyperfiltration element ("membrane element") is a cartridge containing reverse osmosis (RO) or nanofiltration (NF) membranes and spacer sheets and typically having a central permeate tube, see, e.g., U.S. Pat. No. 10,717,050.

Poor brine removal in the flush step of batch and semi-batch reverse osmosis systems can result in higher salt concentrations in the system, however, and can thus cause a higher mineral scaling potential at the end of the filtration period. See, e.g., M. Li, *Desalination,* 496 (2020), 114646. Higher salt concentrations within the system after a flush step can also cause higher operating pressures and elevated concentrations of undesired solutes in the permeate. Improved flushing of brine from the system also provides an incremental improvement in achievable volume recovery and a reduction in energy consumption.

Clearly, there remains a need for batch and semi-batch reverse osmosis systems with more efficient hydraulics during the flushing cycles.

SUMMARY OF THE INVENTION

Accordingly, provided herein is a filtration system for batch or semi-batch hyperfiltration comprising:

(a) a recirculation loop,
(b) a pump providing pressurized feed solution to the recirculation loop,
(c) a waste outlet conduit,
(d) a valve separating the recirculation loop from a waste outlet conduit suitable to provide a discontinuous flow of a concentrated fluid from the recirculation loop,
(d) a control device suitable to actuate said valve,
(e) a membrane pressure vessel within said recirculation loop comprising a feed port, a concentrate port and a permeate port, and containing one or more, preferably two or more hyperfiltration elements aligned in an axial direction, including an end hyperfiltration element located nearest a fluid port, wherein the fluid port is selected from one of said inlet port and said outlet port, and said end hyperfiltration element has a length in the axial direction, and a first distance between said fluid port and said end hyperfiltration element which is at least one third of said length,
(f) a flow distributor located between said end hyperfiltration element and said fluid port; preferably wherein said flow distributor is suitable to provide: (i) a velocity profile across a cross section of said pressure vessel, wherein said velocity profile has a coefficient of variation of less than 0.1, or (ii) a flow resistance of between 10 and 200 kPa·sec·m$^{-1}$ wherein flow resistance (R) is defined as:

$$R = \frac{\Delta P}{v}$$

wherein ΔP is pressure drop across the flow distributor, v is the average velocity and R is measured using pure water at 25°C and an average velocity of 5 cm/sec,

(g) wherein the flow distributor is comprised of a proximal surface nearest the end hyperfiltration element and a distal surface nearest said fluid port, and

(h) an axial positioner within said vessel that locates said distal surface of said flow distributor a second distance from said end hyperfiltration element, wherein said second distance is at least 50% of said first distance.

The advantages and features of novelty that characterize the invention are pointed out with particularity in the claims annexed hereto and forming a part hereof. For a better understanding of the invention, its advantages, and the objects obtained by its use, however, reference should be made to the drawings which form a further part hereof, and to the accompanying descriptive matter, in which there is illustrated and described one or more preferred embodiments of the invention.

BRIEF DESCRIPTION OF THE DRAWINGS

Figure 1 is a schematic diagram of an embodiment of the CCRO filtration system described herein.
Figure 2 is an isometric view of a flow distributor assembly.
Figure 3 is a side view of a flow distributor assembly.
Figure 4 is a side cross-sectional view of a membrane pressure vessel.
Figure 5 is a cut-away view of a portion of a membrane pressure vessel.
Figure 6 is an exploded cutaway view of a portion of a membrane pressure vessel.
Figure 7 is a plan view of a flow distributor surface using slots.
Figure 8 is a plan view of a flow distributor surface using circular orifices.
Figure 9 is a perspective view of a flow distributor using parallel tubes.

DETAILED DESCRIPTION

The configurations of batch and semi-batch reverse osmosis (RO) systems are well known, and these systems have been studied extensively and found to be more efficient than continuous RO systems. See, e.g., J.R. Werber et al., Desalination, 402 (2017) 109-122. Incomplete brine displacement can erode some of these advantages, however. We have found that brine displacement, particularly with the additional space in the pressure vessel, can be improved using a flow distributor upstream of the empty space in the pressure vessel to distribute flow evenly across the cross-section area of the pressure vessel that is perpendicular to the axis defined by the flow of fluid through the pressure vessel. Ideally, the coefficient of variation of the velocity profile downstream, preferably immediately downstream of the flow distributor will be less than 0.1, more preferably less than 0.05, less than 0.03, or less than 0.01, where the coefficient of variation (CV) is a statistical tool that is defined as the ratio of the standard deviation ($\sigma$) to the mean ($\mu$), or:

$$CV = \frac{\sigma}{\mu}$$

Accordingly, the filtration system preferably comprises a flow distributor assembly which occupies the space between the end hyperfiltration element and the end of the pressure vessel. Preferably, the filtration system comprises a flow distributor located between said end hyperfiltration element and said fluid port which provides a flow resistance of between 10 and 200 kPa·sec·m$^{-1}$ wherein flow resistance (R) is defined as:

$$R = \frac{\Delta P}{v}$$

or pressure drop ($\Delta P$) divided by average velocity (v), wherein R is calculated based on $\Delta P$ using pure water at 25°C and an average velocity of 5 cm/sec. For this purpose, the average velocity is calculable by dividing the volumetric feed flow rate into the vessel by the inner diameter of the vessel.

Preferably, the flow distributor is a circular flow plate having a plurality of openings. The flow distributor assembly, flow distributor and flow plate are described in further detail below.

A flow distributor assembly is intended to occupy the space in a pressure vessel between either the first or the last membrane element and the proximal or distal end of the pressure vessel. Accordingly, the flow distributor has a surface that conforms substantially to the cross-section of the outer shell of the pressure vessel. Preferably, the flow distributor assembly is cylindrical and the maximum outside diameter of the assembly is equal to or very slightly less than the inside diameter of the pressure vessel. The pressure vessel assembly need not have a complete cylindrical surface, i.e., the diameter may be equal to the maximum diameter over only a small part of the length of the assembly. Preferably, the flow distributor assembly has two or more radial positioners whose diameter is equal to or very slightly less than the inside diameter of the pressure vessel and the assembly is otherwise open at its maximum diameter or the assembly has a cylindrical outer surface (with or without openings) which acts as a radial positioner. Radial positioners are connected to an axial positioner, which defines the axial position of the flow distributor within the vessel. Preferably, the radial positioner is connected to an axial positioner by spokes, preferably at least two spokes, preferably at least three, preferably at least four. The maximum number of spokes and the thicknesses of the outer and inner rings of the radial positioner are limited only by the pressure drop caused by the combination of radial positioner and flow distributor. A designer of ordinary skill will be able to balance the need for structural stability with the need to achieve a target pressure drop.

Preferably the length of the flow distributor assembly is from 10 to 350 cm, more preferably from 50 to 250 cm, still more preferably from 80 to 120 cm. When the assembly is intended to fill a gap with a length equal to the length of two or more membrane elements (created by omission of more than one membrane element from the membrane pressure vessel), preferably the length of the assembly is from 100 to 300 cm. Alternatively, additional spacers without flow distributors are added to fill the remaining space in the membrane pressure vessel. When intended to fill the gap from omission of only one membrane element, the length of the flow distributor assembly is from 10 to 250 cm, more preferably from 50 to 200 cm, still more preferably from 70 to 150 cm. Preferably, the flow distributor assembly comprises a locking means to affix said pressure vessel flow distributor to another pressure vessel flow distributor, to a pressure vessel end cap adapter, or to a spiral wound membrane. Similar locking structures have been described for connecting two adjacent membrane elements (see, e.g., U.S. Pat. No. 6,632,356 B2).

Preferably, the flow distributor assembly comprises a circular flow plate having at least one opening. Preferably, the diameter of the flow plate is from 10 to 30 cm, preferably from 15 to 25 cm. The exact diameter is not critical to proper operation of the flow plate, which would be sized to fit closely within the walls of a particular pressure vessel. In a preferred embodiment of the invention, the flow plate has a central opening to accommodate a permeate tube or an axial spacer tube or rod; preferably the diameter of the central opening is from 1 to 10 cm, preferably from 3 to 9 cm, preferably from 4 to 8 cm. In this embodiment, the remaining area of the flow plate beyond the central opening is used to modify flow, and there are additional openings in the remaining area, preferably at least 30 openings, more preferably at least 60, still more preferably at least 100, still more preferably at least 130. When the flow distributor includes a fabric, mesh or screen, the number of openings may be 1000/in$^2$ or more. The holes or orifices generate pressure drop at any given flow and can be related directly back to the flow resistance. Preferably, the diameter of the flow plate is equal to or very slightly less (within normal tolerances for a circular cross section object with an O-ring or other sealing device) than the inside diameter of the pressure vessel. Preferably, the remaining area of the flow plate, or the entire area when there is no central opening for a permeate tube, comprises openings, preferably circular openings or slots, each slot preferably being part of an annular section of the flow plate. Preferably, the total area of the openings is from 1 to 80% or more preferably from 1 to 50% of the total area of the flow plate, or of the remaining area outside the center opening if there is a permeate tube or axial spacer opening in the center, preferably at least 2%, preferably at least 3%; preferably no more than 30%, preferably no more than 20%, preferably no more than 10%. It is believed that the total area of the openings is critical, rather than the number of openings or the size of any individual opening. Preferably, the individual openings have a hydraulic diameter (four times the open area divided by the perimeter) from 0.5 to 10 mm, preferably at least 2 mm, preferably at least 2.5 mm; preferably no more than 7 mm, preferably no more than 5 mm. Preferably, the openings are circular, in which case the diameter is equal to the hydraulic diameter. Preferably, the openings are in radially placed circular arrays. Preferably, the thickness of the flow plate is from 2 to 25% of its diameter, preferably from 7 to 18%. These ranges of thickness do not include the thickness of optional support ribs that may be present on the flow plate.

Any material may be suitable for use in the flow plate, provided that it is stable to long-term exposure to the feed solution and further provided that it will not be mechanically deformed by the pressure differences within the pressure vessel. Suitable materials for the flow plate include, e.g., polymeric materials such as polypropylene, polysulphone, polyethylene, acrylonitrile butadiene styrene (ABS), glass or carbon reinforced plastics, ceramics or corrosion resistant metals such as stainless steel, Hastelloy™ or titanium. Preferably the flow plate is immediately adjacent to a radial positioner.

The flow resistance (R) of any flow plate with holes may be measured within a vessel by one skilled in the art using water at 25°C and an average velocity of 5 cm/sec. One skilled in the art can identify a number and shape/size of holes to create a desired flow resistance (R). The design of multi-hole orifice plates is well documented in the literature. See, for example, Bikić S, Đurđević M, Bukurov M, Tašin S. Comparison of single-hole and multi-hole orifice energy consumption. *Advances in Mechanical Engineering*. 2022;14(1); and Tomaszewski A, Przybylinski T, Lackowski M. Experimental and Numerical Analysis of Multi-Hole Orifice Flow Meter: Investigation of the Relationship between Pressure Drop and Mass Flow Rate. Sensors (Basel). 2020 Dec 18;20(24):7281.

Preferably, RO systems of this invention operate at a temperature from 2 to 45 °C, preferably from 4 to 40 °C, preferably from 5 to 35 °C. Preferably, the density of the fluid passing through the flow distributor assembly is from 0.98 to 1.5 g/cm$^3$, preferably from 0.99 to 1.2 g/cm$^3$. Preferably, the pressure drop ($\Delta$P) across the flow plate is from 0.344 to 10.34 kPa, more preferably from 0.344 to 6.89 kPa, more preferably from 0.689 to 2.76 kPa, over the range of typical average velocities for a vessel, corresponding to a flow resistance as defined herein of between 10 and 200 kPa·sec·m$^{-1}$, more preferably, between 10 and 150 kPa·sec·m$^{-1}$, more preferably between 15 and 50 kPa·sec·m$^1$.

Preferably, in a flow distributor assembly comprising a flow plate and having a total length, the flow plate is positioned at from 0% to 40% of the total length of the pressure vessel assembly; preferably at least 4% of the total length, preferably at least 7%; preferably no more than 30% of the total length, preferably no more than 20%, preferably no more than 15%, as measured from the nearest end of the pressure vessel assembly. When a flow distributor assembly is part of a filtration system, an axial positioner within the membrane pressure vessel locates a distal surface of a flow distributor at least 50% of the distance from the end hyperfiltration element to a fluid port, preferably a fluid port into which liquid to be filtered is introduced, preferably at least 75%, preferably at least 80%, preferably at least 85%; preferably no more than 99%, preferably no more than 96%.

In an alternative embodiment, the flow plate described above is comprised of a porous media such as a screen; a nonwoven fabric; or sintered media, such as plastic, metal, glass, or ceramic, for example. The resistance of this flow plate may be measured as described previously. Alternatively, the flow resistance (R) defined herein may be estimated from the grain size or pore size by one skilled in the art using Darcy's Law and the Kozeny-Carman equation.

In another alternative embodiment, the flow distributor is comprised of a cylinder with a flow plate at each end of the cylinder; in this embodiment, the body of the cylinder serves as both an axial and radial positioner. Preferably in this embodiment, each orifice in the proximal flow plate is attached by a tube to the corresponding distal orifice, resulting in a corresponding number of tubes, preferably parallel tubes, distributed across the cross-sectional area of the flow plate. Friction in each of the parallel tubes provides flow resistance (R), which may be measured. Alternatively, with a number of parallel tubes, the flow resistance may be estimated using the Hagen-Poisielle equation to provide the required flow resistance. Preferably, the number of tubes may be between 50 and 250, more preferably between 100 and 200. One skilled in the art can identify a number and shape/size of tubes to create a desired flow resistance (R).

In another preferred embodiment of the invention, the flow distributor assembly is a cylinder with a flow plate as one end of the cylinder; in this embodiment, the body of the cylinder serves as both an axial and radial positioner. The rounded outer surface of the cylinder may be continuous or partially open provided that there is sufficient outer surface to impart structural stability. The end of the cylinder opposite the flow plate is partially or completely open.

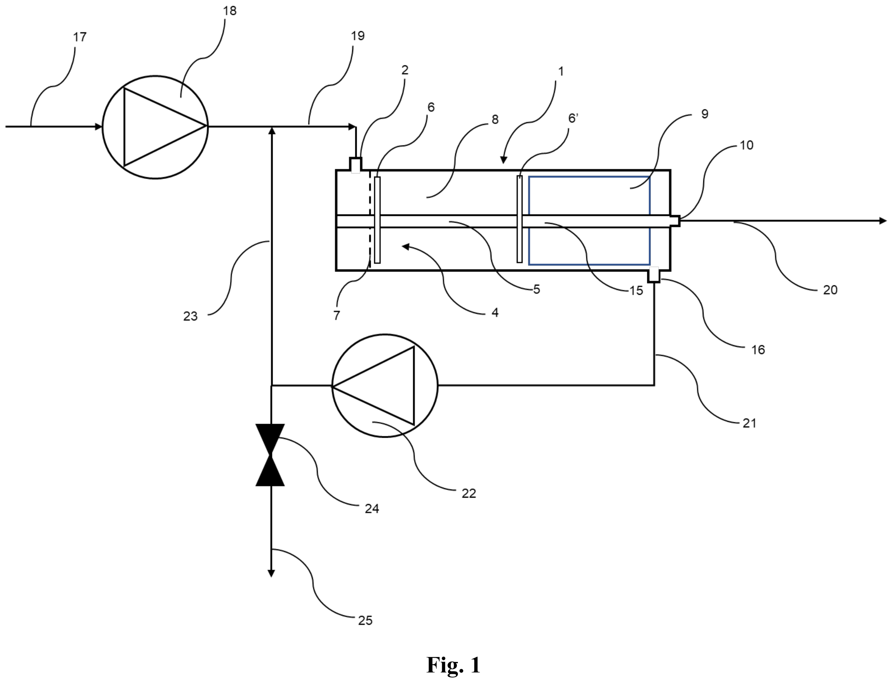

Referring now to the drawings, wherein like reference numerals designate corresponding structure throughout the views, and referring in particular to Figure 1, a semi-batch filtration system 100 comprising a flow distributor assembly 4 is illustrated. Feed solution 17 passes through feed pump 18, joining recycle stream 23 to form blended inlet stream 19 which enters void volume 8 of membrane pressure vessel 1 through inlet port 2. The inlet stream passes through flow distributor 7, which is adjacent to radial positioner 6, which is connected to radial positioner 6' by axial positioner 5. The inlet stream then enters the end membrane element 9, with part passing through the membrane into permeate tube 15 to become permeate stream 20 leaving through permeate end port 10 and concentrate stream 21 leaving through outlet port 16. The concentrate stream passes through recirculation pump 22 to become recycle stream 23 in normal filtration operation mode. During a purge cycle the concentrate stream passes through concentrate valve 24 to become purged concentrate 25.

Not depicted in Fig. 1 is a control device suitable for controlling valve 24. Any other valves that may be present in the semi-batch filtration system 100 may optionally be controlled by the same control device or by one or more other control devices that may be the same or different. Those of skill in the art are able to select and install suitable control device(s) and are further able to operate valve 24 and optionally one or more other valves that may be present in the semi-batch filtration system 100 via the control device(s).

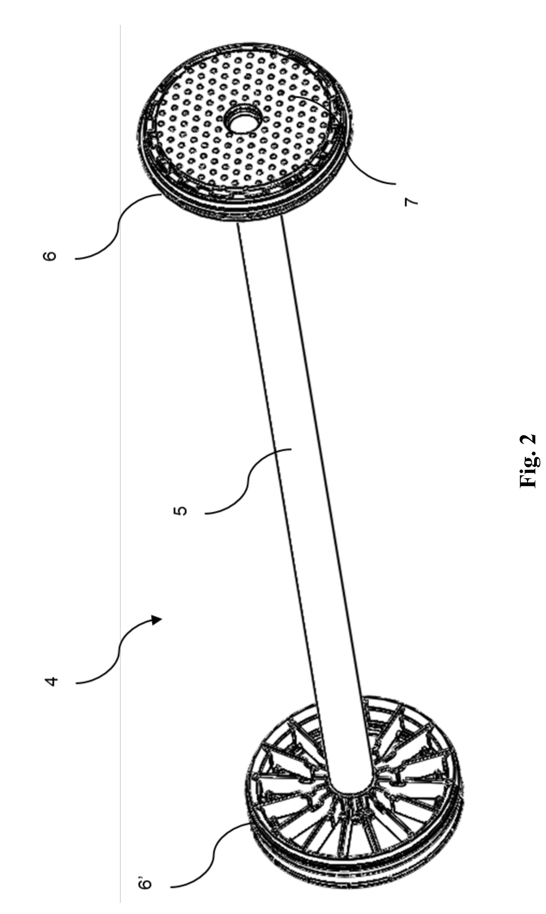

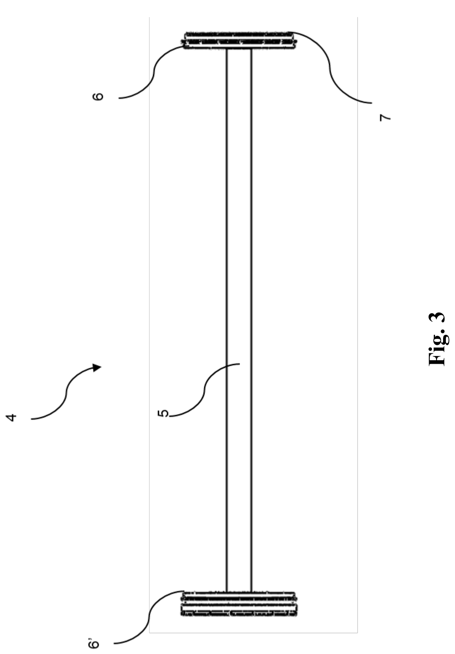

In Figures 2 and 3, a flow distributor assembly 4 is shown with flow distributor 7 adjacent to radial positioner 6, connected to axial positioner 5 which then connects to radial positioner 6'. As described in detail above, the flow distributor may be a flow plate having openings or a porous sintered disk.

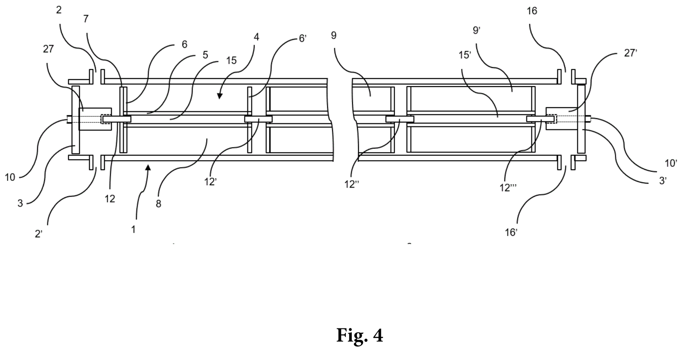

The membrane pressure vessel 1, as shown in Figure 4, has side feed ports 2 and 2' through which the feed solution enters the void volume 8. Also shown are permeate ports 10 and 10', end cap adapters 27 and 27' and vessel end caps 3 and 3'. The flow distributor assembly 4, comprising flow distributor 7, radial positioner 6, connected to axial positioner 5, and radial positioner 6', also connected to axial positioner 5, is depicted here as well. Together, flow distributor 7 and radial positioner 6 form the distal surface of the flow distributor assembly 4. Similarly, the radial positioner 6' forms the proximal surface of the assembly 4. As used herein to describe the pressure vessel assembly, the term "distal" means "nearest the feed end" and the term "proximal" means "nearest the concentrate end." The flow distributor assembly 4 is linked to the end cap adapter 27 with permeate interconnector 12. End cap adapter 27 is linked to the permeate port 10. The flow distributor assembly 4 is also linked to the adjacent end membrane element 9 by permeate interconnector 12' and the opposite end of membrane element 9 is linked to a further membrane element 9' by a second permeate interconnector 12", with membrane element 9' linked to permeate port 10' by permeate interconnector 12'''. In some preferred embodiments, the membrane pressure vessel comprises more than two membrane elements, which are connected in series with additional permeate interconnectors, substantially as depicted in Fig. 4. The feed solution enters the membrane elements 9 via the void space 8, with permeate passing into the center tube 15 and concentrate exiting through side outlet ports 16 and 16'.

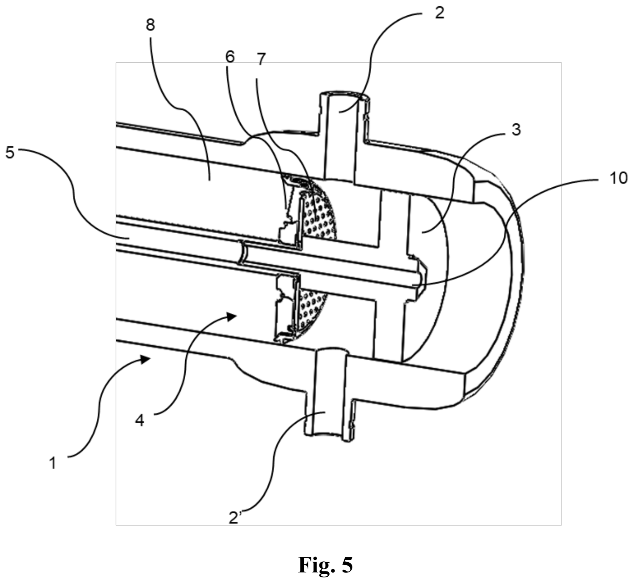

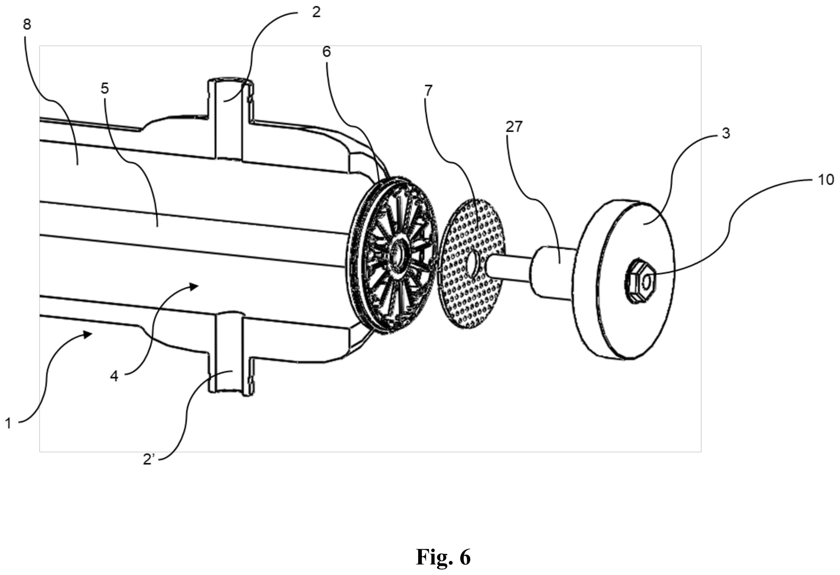

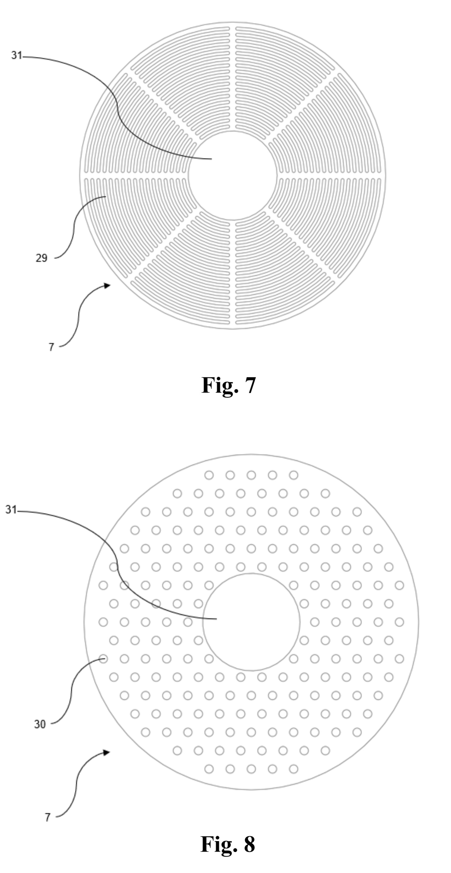

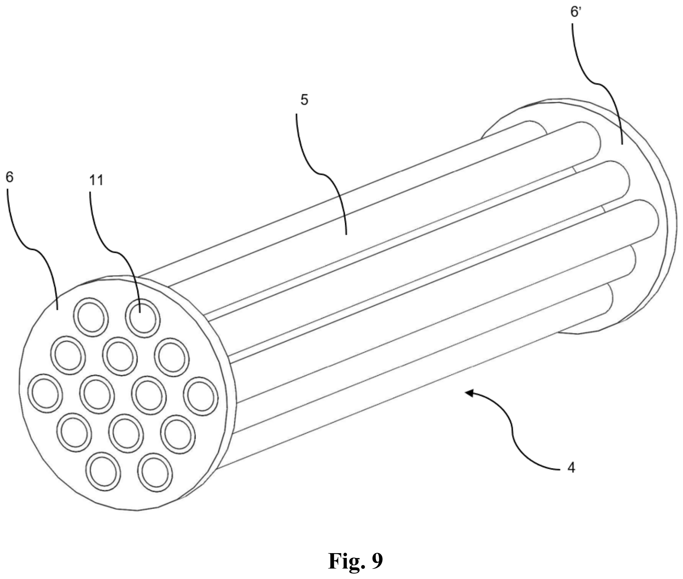

Figures 5 and 6 illustrate positioning of a flow plate 7 having circular holes relative to the inlet ports 2 and 2' and end cap 3; other parts are as described in detail above. Figure 7 shows a flow plate 7 having slot openings 29 and a center opening 31 to incorporate a permeate tube 15 (shown in other figures). Figure 8 shows a flow plate 7 having circular openings 30 and a center opening 31. Figure 9 shows an alternative embodiment of a flow distributor assembly 4, comprising axial positioners 5 connected to an upstream radial positioner 6 and down-stream radial positioner 6', wherein the axial positioners are hollow tubes with a flow tube opening 11 in each end. In practice, the flow distributor assembly 4 is preferably comprised of a plurality of parallel hollow-tube axial positioners 5 with holes in the radial positioners 6 and 6' to permit flow through each axial positioner 5. In another preferred embodiment, the hollow-tube axial positioners may be concentric and are more preferably concentric and approximately equidistantly spaced.

The following example is provided to describe the invention in further detail. This example, which sets forth specific embodiments and a preferred mode presently contemplated for carrying out the invention, is intended to illustrate and not to limit the invention.

EXAMPLE 1

A step tracer study was conducted on a semi-batch CCRO system desalinating a brackish water using a single pressure vessel 1 containing six membrane element positions to evaluate the efficiency of the flush sequence using conductivity measurements. Five membrane elements (Y) were loaded into the vessel in positions two through six, leaving position one, or the lead membrane element position, empty to provide additional system void volume 8. When one system volume (31 gal, 117L) of brine was displaced from the vessel, the salt retained in the system was estimated by conductivity to be ~7%. This data suggests a significant broadening in the residence time distribution when compared to an ideal plug flow reactor due to a combination of non-ideal mixing, Taylor dispersion and axial dispersion resulting from the feed-concentrate spacer in the membrane element. To achieve removal of 99% of the salt accumulated within the system, an additional 27% flush water was required.

To evaluate the improvement in the residence time distribution of the invention, a computational fluid dynamics (CFD) model was developed in ANSYS FLUENT software, commercially available from ANSYS, Inc., of Canonsburg, PA, using interior dimensions of a commercially available reverse osmosis pressure vessel, fluid path dimensions of the feed-concentrate flow path of a commercially available 8" brackish water reverse osmosis membrane and known pressure drop correlations for the membrane, and flow-rates typical in a single pressure vessel for the displacement flush of a semi-batch CCRO system. All modeling was conducted using the physical properties of water at 25°C. A CFD simulation was conducted of the tracer study described above, in which downstream of the pressure vessel side-port inlet there is one spacer element to provide a void volume, and then five commercially available, 400 square feet (37.2 meters squared) membrane elements. To evaluate the effects of a flow distributor installed at the upstream distal end of the lead membrane element position, (110 mm) downstream of the side-port inlet connection centerline), the model was modified to add a sintered porous distributor having diameter 7.95 inches (202 mm) and thickness of 1 inch (25.4 mm) possessing a pressure drop of 0.15 psi (1.034 kPa) for initial modeling. This is substantially equivalent to the pressure drop generated using a multi-orifice plate having diameter 7.95 inches (202 mm), thickness of 1 inch (25.4 mm) and a center hole (nominal diameter of 2.6 inches (66 mm)) to accommodate the axial positioner, wherein the plate has 174 orifices (Y) each with a diameter of 1/8 inches (3.17 mm) evenly distributed across the distributor plate 7 outside the center hole and a flow resistance of 19.8 kPa·sec·m$^{-1}$. The estimated pressure vessel system volume is 33.2 gallons (125.6 L), with a flow rate of 26.8-gpm (6.1 m$^3$/h) during the displacement step. Table 1 summarizes the results of the CFD modeling.

Table 1. Results of CFD Modeling

| Brine Displacement (%) | Cumulative Volume (gal) | | Improvement in Flush |
| --- | --- | --- | --- |
| | Baseline | With flow distributor | |
| 0.9 | 30.7 | 30.28 | 1.2% |
| 0.95 | 33.17 | 32.41 | 2.3% |
| 0.96 | 33.90 | 33.01 | 2.6% |
| 0.97 | 34.84 | 33.72 | 3.2% |
| 0.98 | 36.18 | 34.68 | 4.1% |
| 0.99 | 38.59 | 36.22 | 6.1% |

(continued)

| Brine Displacement (%) | Cumulative Volume (gal) | | Improvement in Flush |
|---|---|---|---|
| | Baseline | With flow distributor | |
| 0.999 | 47.97 | 42.37 | 11.7% |

As a result of the improved flow distribution into the void volume 8, 6.1% less volume of water is required to remove 99% of the accumulated salt during the CCRO displacement flush.

While certain of the preferred embodiments of the present invention have been described and specifically exemplified above, it is not intended that the invention be limited to such embodiments. Rather, it is to be understood that even though numerous characteristics and advantages of the present invention have been set forth in the foregoing description, together with details of the structure and function of the invention, the disclosure is illustrative only, and changes may be made in detail, especially in matters of shape, size and arrangement of parts within the principles of the invention to the full extent indicated by the broad general meaning of the terms in which the appended claims are expressed.

ITEMS

1. A filtration system for batch or semi-batch hyperfiltration comprising:

(a) a recirculation loop,
(b) a pump providing pressurized feed solution to the recirculation loop,
(c) a waste outlet conduit,
(d) a valve separating the recirculation loop from a waste outlet conduit suitable to provide a discontinuous flow of a concentrated fluid from the recirculation loop,
(d) a control device suitable to actuate said valve,
(e) a membrane pressure vessel within said recirculation loop comprising a feed port, concentrate port and a permeate port, and containing two or more hyperfiltration elements aligned in an axial direction, including an end hyperfiltration element located nearest a fluid port, wherein the fluid port is selected from one of said inlet port and said outlet port, and said end hyperfiltration element has a length in the axial direction, and a first distance between said fluid port and said end hyperfiltration element which is at least one third of said length,
(f) a flow distributor located between said end hyperfiltration element and said fluid port;
(g) wherein the flow distributor is comprised of a proximal surface nearest the end hyperfiltration element and a distal surface nearest said fluid port, and
(h) an axial positioner within said vessel that locates said distal surface of said flow distributor a second distance from said end hyperfiltration element, wherein said second distance is at least 50% of said first distance.

2. The filtration system of item 1, wherein said flow distributor is suitable to provide: (i) a velocity profile across a cross section of said pressure vessel, wherein said velocity profile has a coefficient of variation of less than 0.1, or (ii) a flow resistance of between 10 and 200 kPa·sec·m$^{-1}$ wherein flow resistance (R) is defined as:

$$R = \frac{\Delta P}{v}$$

wherein $\Delta P$ is pressure drop across the flow distributor, v is the average velocity and R is measured using pure water at 25°C and an average velocity of 5 cm/sec.

3. The filtration system of item 1 or item 2, in which said end hyperfiltration element has a length in the axial direction and said second distance is greater than one third of said length.

4. The filtration system of any of items 1, 2, or 3 in which said flow distributor comprises: (i) a flow plate having at least one opening, wherein total area of said at least one opening is from 1 to 50% of total area of the flow plate; (ii) sintered porous media; (iii) a mesh, a screen or a fabric; or (iv) a set of parallel or concentric tubes.

5. The filtration system of any preceding item in which the flow plate has a central opening to accommodate a permeate tube and remaining area of the flow plate has at least one additional opening, wherein total area of said at least one additional opening is from 2 to 10% of said remaining area of the flow plate.

6. A flow distributor assembly for use in a batch or semi-batch hyperfiltration system pressure vessel comprising:

    (a) a flow distributor preferably having an outer circular surface,
    (b) an axial positioner, and
    (c) a radial positioner.

7. The flow distributor assembly of item 6, wherein said flow distributor is suitable to provide: (i) a velocity profile across a cross section of said pressure vessel, wherein said velocity profile has a coefficient of variation of less than 0.1, or (ii) a flow resistance of between 10 and 200 kPa·sec·m$^{-1}$ wherein resistance (R) is defined as:

$$R = \frac{\Delta P}{v}$$

wherein $\Delta P$ is pressure drop across the flow distributor, v is the average velocity and R is measured using pure water at 25°C and an average velocity of 5 cm/sec.

8. The flow distributor assembly of item 6 or item 7 in which the flow distributor comprises: (i) a flow plate having at least one opening, wherein total area of said at least one opening is from 1 to 50% of total area of the flow plate; (ii) a porous plate; (iii) a mesh, a screen or a fabric; or (iv) a set of parallel or concentric tubes.

9. The flow distributor assembly of any of items 6, 7, or 8 in which the flow distributor comprises a flow plate which has a central opening to accommodate a permeate tube and the remaining area of the flow plate has at least one additional opening, wherein total area of said at least one additional opening is from 2 to 10% of said remaining area of the flow plate.

10. A flow distributor assembly for insertion into a pressure vessel for use in a batch or semi-batch reverse osmosis or nanofiltration system, comprising:

    (a) a flow distributor,

    (b) an axial positioner, and

    (c) a radial positioner.

11. The flow distributor assembly of item 10, wherein said flow distributor comprises: (i) a flow plate having at least one opening, wherein total area of said at least one opening is from 1 to 50% of total area of the flow plate; (ii) a porous plate; (iii) a mesh, a screen or a fabric; or (iv) a set of parallel or concentric tubes.

12. The flow distributor assembly of item 10 or item 11 in which the flow distributor comprises a flow plate having at least one opening, wherein total area of said at least one opening is from 1 to 50% of total area of the flow plate.

13. The flow distributor assembly of any of items 10, 11 or 12 in which the flow plate has a central opening to accommodate a permeate tube and remaining area of the flow plate has at least one additional opening, wherein total area of said at least one additional opening is from 2 to 10% of said remaining area of the flow plate.

14. The flow distributor assembly of any of items 10 through 13 wherein the axial distributor comprises a plurality of hollow tubes which may have different axes parallel to the axial positioner or which may be concentric.

15. The flow distributor assembly of any of items 10 through 14 wherein the flow resistance of the flow distributor is between 10 and 200 kPa·sec·m$^{-1}$ ; said flow resistance (R) defined as:

$$R = \frac{\Delta P}{v}$$

wherein $\Delta P$ is pressure drop across the flow distributor, v is the average velocity and R is when measured using pure water at 25°C and an average linear velocity of 5 cm/sec.

16. A pressure vessel assembly comprising the flow distributor assembly of any of items 6 through 15.

17. A hyperfiltration system comprising the pressure vessel assembly of item 16.

**Claims**

1. A flow distributor assembly for use in a batch or semi-batch hyperfiltration system pressure vessel comprising:

(a) a flow distributor preferably having an outer circular surface,
(b) an axial positioner, and
(c) a radial positioner.

2. The flow distributor assembly of claim 1, wherein said flow distributor is suitable to provide: (i) a velocity profile across a cross section of said pressure vessel, wherein said velocity profile has a coefficient of variation of less than 0.1, or (ii) a flow resistance of between 10 and 200 kPa·sec·m$^{-1}$ wherein resistance (R) is defined as:

$$R = \frac{\Delta P}{v}$$

wherein $\Delta P$ is pressure drop across the flow distributor, v is the average velocity and R is measured using pure water at 25°C and an average velocity of 5 cm/sec.

3. The flow distributor assembly of claim 1 or claim 2 in which the flow distributor comprises: (i) a flow plate having at least one opening, wherein total area of said at least one opening is from 1 to 50% of total area of the flow plate; (ii) a porous plate; (iii) a mesh, a screen or a fabric; or (iv) a set of parallel or concentric tubes.

4. The flow distributor assembly of any of claims 1, 2, or 3 in which the flow distributor comprises a flow plate which has a central opening to accommodate a permeate tube and the remaining area of the flow plate has at least one additional opening, wherein total area of said at least one additional opening is from 2 to 10% of said remaining area of the flow plate.

5. A flow distributor assembly for insertion into a pressure vessel for use in a batch or semi-batch reverse osmosis or nanofiltration system, comprising:

(a) a flow distributor,
(b) an axial positioner, and
(c) a radial positioner.

6. The flow distributor assembly of claim 5, wherein said flow distributor comprises: (i) a flow plate having at least one opening, wherein total area of said at least one opening is from 1 to 50% of total area of the flow plate; (ii) a porous plate; (iii) a mesh, a screen or a fabric; or (iv) a set of parallel or concentric tubes.

7. The flow distributor assembly of claim 5 or claim 6 in which the flow distributor comprises a flow plate having at least one opening, wherein total area of said at least one opening is from 1 to 50% of total area of the flow plate.

8. The flow distributor assembly of any of claims 5, 6 or 7 in which the flow plate has a central opening to accommodate a permeate tube and remaining area of the flow plate has at least one additional opening, wherein total area of said at least one additional opening is from 2 to 10% of said remaining area of the flow plate.

9. The flow distributor assembly of any of claims 5 through 8 wherein the axial distributor comprises a plurality of hollow tubes which may have different axes parallel to the axial positioner or which may be concentric.

10. The flow distributor assembly of any of claims 5 through 9 wherein the flow resistance of the flow distributor is between 10 and 200 kPa·sec·m$^{-1}$ ; said flow resistance (R) defined as:

$$R = \frac{\Delta P}{v}$$

wherein ΔP is pressure drop across the flow distributor, v is the average velocity and R is when measured using pure water at 25°C and an average linear velocity of 5 cm/sec.

**11.** A pressure vessel assembly comprising the flow distributor assembly of any of claims 1 through 10.

**12.** A hyperfiltration system comprising the pressure vessel assembly of claim 11.

$$R = \frac{\Delta P}{v}$$

Fig. 1

**Fig. 2**

EP 4 717 347 A2

**Fig. 3**

Fig. 4

**Fig. 5**

Fig. 6

**Fig. 7**

**Fig. 8**

**Fig. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 63351594
- US 63535178 B

- US 10717050 B
- US 6632356 B2

### Non-patent literature cited in the description

- **J.R. WERBER et al.** *Desalination*, 2017, vol. 402, 109-122

- **TOMASZEWSKI A** ; **PRZYBYLINSKI T** ; **LACKOWSKI M**. Experimental and Numerical Analysis of Multi-Hole Orifice Flow Meter: Investigation of the Relationship between Pressure Drop and Mass Flow Rate. *Sensors (Basel)*, 18 December 2020, vol. 20 (24), 7281